# EUROPÄISCHE PATENTSCHRIFT

(11) **EP 0 288 935 B1**
(45) Veröffentlichungstag und Bekanntmachung des Hinweises auf die Patenterteilung: **03.11.1993**
(21) Anmeldenummer: 88106520.5
(22) Anmeldetag: 22.04.1988
(51) Int. Cl.: H04Q 11/04, H04M 11/06

(54) **Anordnung zum Bilden eines zusätzlichen ISDN-Basisanschlusses in einer ISDN-Teilnehmereinrichtung**
Arrangement for creating a supplementary ISDN basic access in an ISDN subscriber installation
Dispositif pour établir un accès de base RNIS supplémentaire dans une installation d'abonné RNIS

(30) Priorität: 29.04.1987 DE 3714315
(43) Veröffentlichungstag der Anmeldung: 02.11.1988
(73) Patentinhaber: SIEMENS AKTIENGESELLSCHAFT, 80333 München (DE)
(72) Erfinder: Weiss, Albert, Dipl.-Ing. (FH), D-8000 München 90 (DE)

(56) Entgegenhaltungen:
- PROCEEDINGS OF THE 1982 INTERNATIONAL SYMPOSIUM ON SUBSCRIBER LOOPS AND SERVICES, 20-24 September 1982, seiten 62-65, Toronto, CA; G.M.J. HAVERMANS et al. "Digital subscriber lines to PRX/D"
- IRE WESCON CONVENTION RECORD. vol. 30, 18 November 1986, NORTH HOLLYWOOD US Seiten 1 - 9; F.M. WICKERSHAM: "Current ISDN design approaches"
- ELECTRICAL COMMUNICATION. vol. 61, no. 1, 1987, BRUSSELS BE Seiten 72 - 80; D.ADOLPHS et al.: "Subsets, Terminals, and Terminal Adapters for the Public ISDN"
- Vorträge der NTG-Fachtagung, 25-27 März 1985, Seiten 42 - 49; Berlin, DE; H.SAILER: "Architekt "Architektur des digitalen Teilnehmeranschlusses"
- NTZ NACHRICHTECHNISCHE ZEITSCHRIFT. vol. 40, no. 10, Oktober 1987, BERLIN DE Seiten 708 - 711; D.KRAMER et al.: "Neue Terminal-Generation mit Zugang zur ISDN-Welt"

## Beschreibung

Die Erfindung betrifft eine Anordnung gemäß dem Oberbegriff des Patentanspruches 1.

An digitale, diensteintegrierende Fernmelde-Vermittlungsanlagen - im weiteren mit ISDN-Vermittlung bezeichnet - werden ISDN-Teilnehmereinrichtungen - z. B. Telefon-, Telefax-, Teletexeinrichtungen usw. - entweder direkt oder über eine ISDN-Netzanschlußeinrichtung angeschlossen. Direkt angeschlossene Teilnehmereinrichtungen enthalten alle erforderlichen Einrichtungen für den Anschluß an die ISDN-Vermittlung und das Betreiben der Teilnehmereinrichtung selbst. Im einzelnen sind dies eine Übertragungseinrichtung, eine Kommunikationsprotokoll-Steuereinrichtung sowie eine Teilnehmereinrichtungssteuerung. Die Übertragungseinrichtung stellt das Bindeglied zu einer Übertragungsstrecke dar, die die ISDN-Teilnehmereinrichtungen mit der ISDN-Vermittlung verbindet. Je nach gewähltem Übertragungsverfahren weist die Übertragungseinrichtung alle Einrichtungen auf, die zur Steuerung dieser Verfahren erforderlich sind. Zur Zeit übliche Übertragungsverfahren sind das Zweidraht-Duplexübertragungsverfahren mit Echokompensation und das Zweidraht-Zeitgetrenntlageverfahren - "Ping-Pong-Verfahren". Solche Verfahren sind bereits in verfügbaren, integrierten Schaltungen realisiert. Die Schnittstelle zur Übertragungsstrecke wird je nach Übertragungsverfahren mit U_{KO} bzw. U_{PO} bezeichnet. Die mit den weiteren Einrichtungen der ISDN-Teilnehmereinrichtung zu verbindende Schnittstelle der Übertragungseinrichtung ist als ISDN-orientierte Schnittstelle definiert. Diese Schnittstelle umfaßt beispielsweise jeweils eine serielle 144 KBit/s-Sende- und Empfangsleitung sowie zwei Anschlüsse, die jeweils ein 8 KHz-Rahmensignal und ein 512 KHz-Taktsignal abgeben. Die Information der beiden ISDN-Nachrichtenkanäle (B-Kanäle), eines Signalisierungskanals (D-Kanal) und eines Steuer- sowie Monitorkanals werden in 8 KHz-Paketinformationen (Rahmen) über die Empfangs-bzw. Sendeleitung übermittelt.

Diese ISDN-orientierte Schnittstelle ist mit einer Kommunikationsprotokoll-Steuereinrichtung - im weiteren mit Protokollsteuerung bezeichnet - verbunden. Die ebenfalls als integrierte Schaltung verfügbare Protokollsteuerung übernimmt das gesicherte Übermitteln der Signalisierungsinformationen und der eventuell im Signalisierungskanal übertragenen paketorientierten Daten in beide Richtungen. Das Sicherungsprotokoll für ISDN-Anwendungen ist in den CCITT-Empfehlungen I. 440 und I. 441 festgelegt. Die Steuerung der Funktionsabläufe in der Protokollsteuerung wird von einem externen, über eine Mikroprozessor-Busschnittstelle angeschlossenen Mikroprozessor durch Schreiben und Lesen spezieller, hierfür in der Protokollsteuerung angeordneter Register durchgeführt. Der Mikroprozessor kann beispielsweise durch ein 16 Bit-Mikroprozessorsystem 82520 der Fa. Siemens realisiert sein. Es können mehrere derartiger Protokollsteuerungen an eine ISDN-orientierte Schnittstelle einer Übertragungseinrichtung angeschlossen werden. Den Zugriff der einzelnen Protokollsteuerungen auf die ISDN-orientierte Schnittstelle steuert jeweils der bereits erläuterte Mikroprozessor. Über eine weitere, serielle Schnittstelle wird die Protokollsteuerung mit einer Teilnehmereinrichtungssteuerung verbunden. Diese Steuerung übernimmt alle Aufgaben, die zum Betrieb und zur Wartung der Teilnehmereinrichtung erforderlich sind.

Des weiteren ist eine wiederum als integrierte Schaltung realisierte ISDN-Basisanschluß-Schnittstelleneinrichtung verfügbar, die alle erforderlichen Einrichtungen enthält, um die Anpassung der ISDN-orientierten Schnittstelle an eine logische ISDN-Basisanschlußschnittstelle vorzunehmen. Die ISDN-Basisanschlußschnittstelle stellt die eigentliche Teilnehmer-Netzschnittstelle dar.

Diese bei CCITT I. 430 standardisierte Schnittstelle wird im weiteren mit S₀-Schnittstelle bezeichnet. Zwischen der logischen S₀-Schnittstelle und der eigentlichen S₀-Schnittstelle sind noch Anpassungsmittel einzufügen, die im wesentlichen der Anpassung der logischen S₀-Schnittstelle an die S₀-Schnittstelle sowie dem Überspannungsschutz und der Energieeinkopplung dienen. Erforderlich ist in jedem Fall ein Übertrager, der die physikalischen Eigenschaften der Sendeleitungen der logischen S₀-Schnittstelle an die physikalischen Eigenschaften der S₀-Schnittstelle anpaßt. Anpassungsmittel zur Energieeinkopplung sowie zum Überspannungsschutz sind je nach Anforderung einzubringen. Die ISDN-Basisanschluß-Schnittstelleneinrichtung - im weiteren mit S₀-Anschlußeinrichtung bezeichnet - weist einen zusätzlichen Anschluß auf, mittels dessen der Signalisierungskanal-Zugriff mehrerer an eine ISDN-orientierte Schnittstelle angeschlossener S₀-Anschlußeinrichtungen gesteuert wird. Legt eine der S₀-Anschlußeinrichtungen an diesen zusätzlichen Anschluß - aufgrund der Funktion bidirektional und bipolar realisiert - eine Sperrinformation an, so kann nur der Signalisierungskanal der aktuell belegenden S₀-Anschlußeinrichtung auf die ISDN-orientierte Schnittstelle zugreifen. In den weiteren S₀-Anschlußeinrichtungen wird der Signalisierungskanal-Zugriff verhindert, z. B. durch Zurückleiten bzw. Spiegeln der Signalisierungsinformation an die Teilnehmereinrichtungssteuerung.

Eine eingangs beschriebene ISDN-Teilnehmereinrichtung, bestehend aus den drei eingangs erläuterten Einrichtungen, weist keine S₀-Schnittstelle auf. In einer bestimmten Anzahl von Fällen - hängt im wesentlichen von der ISDN-Netzentwicklung ab - besteht jedoch der Wunsch, eine zusätzliche Teilnehmereinrichtung - wie z. B. Telefax-, Teletexeinrichtung usw. - an einen bereits bestehenden ISDN-Anschluß anzuschließen. Dies kann jedoch nur über eine S₀-Schnittstelle erfolgen, was entweder eine S₀-Schnittstelle an jeder Teilnehmereinrichtung - aus wirtschaftlichen Gründen nicht sinnvoll - oder ein nachträgliches Einbringen der S₀-Schnittstelle in die Teilnehmereinrichtung erfordert.

Die Aufgabe der Erfindung besteht darin, einerseits die S₀-Schnittstelle in eine eingangs beschriebene ISDN-Teilnehmereinrichtung, ausgehend von dem vorhandenen integrierten Schaltkreiskonzept, mit geringstem zusätzlichen Hard- und Softwareaufwand zu implementieren und andererseits ein einfaches, nachträgliches Einfügen der S₀-Schnittstelle in die ISDN-Teilnehmereinrichtung zu ermöglichen. Die Aufgabe wird ausgehend von der eingangs beschriebenen ISDN-Teilnehmereinrichtung durch die kennzeichnenden Merkmale des Anspruches 1 gelöst.

Ein wesentlicher Vorteil der erfindungsgemäßen Anordnung besteht darin, daß alle vorhandenen Funktionen der integrierten Schaltkreise in optimaler Weise genutzt werden, d. h. daß mit Einfügen nur eines zusätzlichen Anschlußes am Mikroprozessor und mit Einbringen einer zusätzlichen, jedoch wenig umfänglichen Software in den Mikroprozessor ein Minimum an Hard- und Software-Aufwand erreicht wird.

Der gravierendste Vorteil der erfindungsgemäßen Anordnung ist jedoch darin zu sehen, daß in einer Teilnehmereinrichtung, die nachträglich mit einer S₀-Schnittstelle ausgestattet werden soll, außer den zusätzlichen Anschlüssen und der Software im Mikroprozessor keine weiteren Hardware- oder Softwarekomponenten gegenüber der ursprünglichen Schaltungsanordnung vorgeleistet werden müssen; dies ist als die wirtschaftlichste Lösung hinsichtlich der zu erbringenden Vorleistungen für ein nachträgliches Einfügen einer S₀-Schnittstelle anzusehen.

Nach einer vorteilhaften Weiterbildung der Erfindung gemäß Patentanspruch 2 ist der Mikroprozessor mittels eines Einchip-Prozessors realisierbar. Dies bedeutet, daß die Software für das Bedienen des zusätzlichen Anschlusses nicht vorgeleistet werden muß, sondern bei nachträglichem Einfügen einer S₀-Schnittstelle in eine ISDN-Teilnehmereinrichtung durch einfachen Tausch der beispielsweise steckbar angeordneten Einchip-Mikroprozessoren eingebracht werden kann.

Eine weitere vorteilhafte Weiterbildung der Erfindung gemäß Patentanspruch 3 ist darin zu sehen, daß die ISDN-Basisanschluß-Schnittstelleneinrichtung und die Anpassungsmittel eine nachträglich in die Teilnehmereinrichtung einfügbare S₀-Adaptereinrichtung bilden und über Steck-, Löt- oder Klemmverbindungen mit der ISDN-orientierten Schnittstelle und mit dem zusätzlichen Anschluß des Mikroprozessors verbindbar sind. Hierdurch können durch einfaches Einsetzen einer zusätzlichen S₀-Adapterkarte in eine beispielsweise vorverdrahtete Steckeinrichtung in der ISDN-Teilnehmereinrichtung sowohl die zusätzlichen Systemkomponenten eingebracht als auch die Verbindung von der S₀- zur ISDN-orientierten Schnittstelle hergestellt werden. Hierbei wird die ISDN-Teilnehmereinrichtung mittels Verbindungen von der S₀-Adapter-Steckeinrichtung zur mechanischen, die S₀-Schnittstelle repräsentierende, von außen zugängliche Steckverbindung sowie von der ISDN-orientierten Schnittstelle zum zusätzlichen Anschluß des Mikroprozessors soweit vorbereitet, daß durch einfaches Stecken der S₀-Adaptereinrichtung die S₀-Schnittstelle nachgerüstet werden kann.

Im folgenden wird die Erfindung anhand einer Zeichnung näher erläutert.

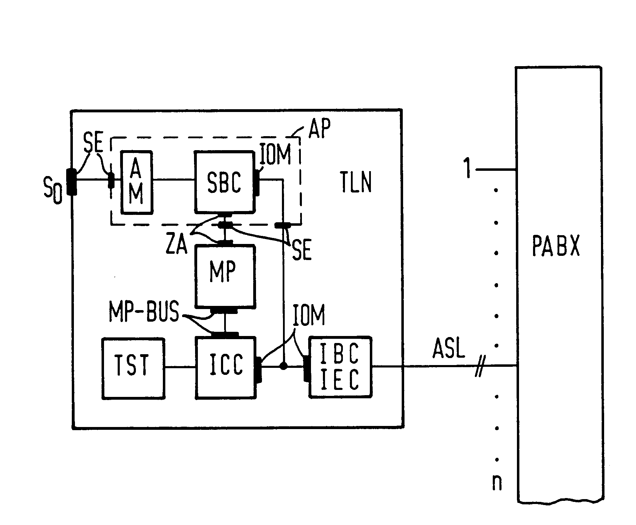

Die Figur zeigt die zur Erfindung erforderlichen Systemkomponenten einer ISDN-Teilnehmereinrichtung TLN, die über eine Anschlußleitung ASL an einen der Teilnehmereingänge 1...n einer Nebenstellenanlage PABX angeschlossen sind. Die einzelnen Systemkomponenten sind durch folgende integrierte Schaltkreise realisiert:
· PEB 2090 realisiert die Übertragungseinrichtung IEC mit Zweidraht-Duplexübertragungsverfahren mit Echokompensation.
· PEB 2095 realisiert die Übertragungseinrichtung IBC mit Zweidraht-Zeitgetrenntlageverfahren.
· PEB 2070 realisiert die Kommunikationsprotokoll-Steuereinrichtung ICC.
· PEB 2080 realisiert die ISDN-Basisanschluß-Schnittstelleneinrichtung SBC.

Der Aufbau sowie der Funktionsumfang der einzelnen integrierten Schaltkreise entspricht den der in der Siemens-Druckschrift "Telcom Report 9, englisch, Page 230 - 234" erläuterten. Die mit der Anschlußleitung ASL verbundene Übertragungseinrichtung IBC, IEC stellt das Bindeglied zur Vermittlungseinrichtung PABX dar. Je nach gewähltem Übertragungsverfahren - hängt im wesentlichen von der Leitungslänge und der Leitungsqualität ab - kommt eine Übertragungseinrichtung mit Zweidraht-Duplexübertragungsverfahren mit Echokompensation oder ein Zweidraht-Zeitgetrenntlageverfahren zum Einsatz. Die Übertragungseinrichtung IBC, IEC ist über eine hierfür vorgesehene ISDN-orientierte Schnittstelle IOM sowohl mit einer Kommunikationsprotokoll-Steuereinrichtung ICC - im weiteren mit Protokollsteuerung bezeichnet - als auch mit einer ISDN-Basisanschluß-Schnittstelleneinrichtung SBC - im weiteren mit S₀-Anschlußeinrichtung bezeichnet - verbunden. Die Protokollsteuerung ICC ist des weiteren über eine entsprechende Schnittstelle mit der Teilnehmereinrichtungssteuerung TST verbunden. Da die Teilnehmereinrichtungssteuerung TST die erfindungsgemäße Anordnung weder hard- noch softwaremäßig beeinflußt, wird diese im weiteren nicht näher erläutert. Beispielsweise könnte es sich hier um eine Zentralsteuereinrichtung einer ISDN-Teletexeinrichtung handeln. Die Protokollsteuerung ICC weist zusätzlich eine Mikroprozessor-Busschnittstelle MP-BUS auf, über die sie mit einem Mikroprozessor MP verbunden ist. Der Mikroprozessor MP kann beispielsweise durch ein Einchip-Mikroprozessorsystem SAB 8051 der Fa. Siemens realisiert sein. Die Mikroprozessor-Busschnittstelle MP-BUS besteht aus acht Adressen-/Datenleitungen, aus einer Lese- und Schreibleitung sowie einer Übernahme- und einer Interruptleitung. Die an den Adressen-/Datenleitungen anstehenden Adresseninformationen werden mit einem Übernahmesignal auf der Übernahmeleitung in ein internes, nicht dargestelltes Adressenregister übernommen. Hiermit werden die protokollsteuerungsinternen Register ICC adressiert. Mit einem Steuersignal auf den Schreib- oder Leseleitungen werden die an den Datenleitungen vorliegenden Daten- und Steuerinformationen transferiert. Interne Zustände der Protokollsteuerung ICC können durch Anlegen einer entsprechenden Information an der Interruptleitung abgefragt werden. Über einen zusätzlichen Anschluß am Mikroprozessor MP, d. h. einem freien Port, ist dieser mit einem Anschluß ZA der S₀-Anschlußeinrichtung SBC verbunden. Dieser Anschluß ZA an der S₀-Anschlußeinrichtung SBC ist mittels eines "Open-Drain-Ein-/Ausgang" realisiert. Mittels dieses Anschlusses ZA wird der Zugriff mehrerer S₀-Anschlußeinrichtungen SBC auf die ISDN-orientierte Schnittstelle IOM koordiniert. Eine ISDN-Teilnehmereinrichtung TLN, die Informationen über den Signalisierungskanal senden will, leitet die Signalisierungsinformationen in den Signalisierungskanal. In der S₀-Anschlußeinrichtung SBC wird diese Signalisierungsinformation auf den vorher erläuterten Anschluß ZA geführt und dort, je nach dem, ob bereits eine Signalisierungsinformation einer anderen ISDN-Teilnehmereinrichtung TLN vorliegt, die Signalisierungsinformation über den gleichen Anschluß an die ISDN-Teilnehmereinrichtung TLN zurückgeleitet oder unterdrückt. Die ISDN-Teilnehmereinrichtung TLN wertet die Information des bei ihr ankommenden Signalisierungskanals aus und vergleicht diese mit der von ihr gesendeten Signalisierungsinformation. Stimmen beide Signalisierungsinformationen überein, schließt sie daraus, daß sie nun aktuellen Zugriff auf die ISDN-orientierte Schnittstelle IOM besitzt. Andernfalls beendet sie das Senden von Signalisierungsinformationen und versucht erst dann wieder Signalisierungsinformationen abzusetzen, nachdem sie eine Information empfängt, die anzeigt, daß der Signalisierungskanal nicht mehr belegt ist. Dieser Anschluß ZA der S₀-Anschlußeinrichtung SBC wird nun gemäß vorhergehend erläutertem Zugriffsverfahren vom Mikroprozessor MP bedient. Je nach dem, ob die Protokollsteuerung ICC einen aktuellen Zugriff auf die ISDN-orientierte Schnittstelle IOM durchführt, wird der an der S₀-Anschlußeinrichtung SBC ankommende Signalisierungskanal an die ISDN-Teilnehmereinrichtung zurückgeleitet oder unterdrückt.

Die S₀-Anschlußeinrichtung ist des weiteren mit Anpassungsmitteln AM verbunden, die vorzugsweise der physikalischen Anpassung der logischen S₀-Schnittstelle des intergrierten Schaltkreises an die nach außen geführte S₀-Schnittstelle dienen. Im wesentlichen wird diese Aufgabe durch einen Übertrager realisiert, der die nach CCITT I.430 geforderten Werte für Unsymmetrie- und Gleichtaktdämpfung gewährleistet. Weitere Anpassungsmittel AM können Mittel zum Überspannungsschutz sowie zur Energieeinspeisung - z. B. für in der Anschlußleitung ASL angeordneter Regeneratoren - sein.

Die Anpassungsmittel AM sowie die S₀-Anschlußeinrichtung können auf einer separaten Adapterplatine AP - in der Zeichnung durch gestrichelte Linien bestimmt - angeordnet sein. Mit entsprechenden Steckelementen SE versehen, kann diese Adapterplatine AP nachträglich in die ISDN-Teilnehmereinrichtung TLN eingesteckt werden. Hierzu muß in der ISDN-Teilnehmereinrichtung TLN die entsprechende Steckeinrichtung SE und die Verdrahtung zur ISDN-orientierten Schnittstelle IOM und zur physikalischen S₀-Schnittstelle vorgeleistet werden. Die physikalische S₀-Schnittstelle kann ebenfalls durch eine Steckeinrichtung SE realisiert sein, die entweder vorzuleisten oder nachträglich in eine beispielsweise mit einer Blindabdeckung versehenen Öffnung der ISDN-Teilnehmereinrichtung TLN einzubringen ist. Somit kann eine ISDN-Teilnehmereinrichtung TLN auf einfache und wirtschaftliche Weise nachträglich mit einer S₀-Schnittstelle ausgerüstet werden, um weitere ISDN-Teilnehmereinrichtungen TLN, die eine S₀-Schnittstelle aufweisen, anzuschließen.

## Patentansprüche

1. Anordnung zum Bilden einer zusätzlichen, für den Anschluß einer weiteren ISDN-Teilnehmereinrichtung vorgesehenen ISDN-Basisanschlußschnittstelle (S₀) in einer ISDN-Teilnehmereinrichtung (TLN), die über entsprechende Übertragungswege (ASL) mit einer diensteintegrierenden, digitalen Kommunikations-Vermittlungseinrichtung (PABX) verbunden ist und die ISDN-Teilnehmereinrichtung (TLN) durch die Serienschaltung einer mittels einer integrierten Schaltung realisierten Übertragungseinrichtung (IBC, IEC), die ein der Übertragung der Informationen dienendes Übertragungsverfahren steuert, einer mittels einer integrierten Schaltung realisierten Kommunikationsprotokoll-Steuereinrichtung (ICC), die die Übermittlung der einem Signalisierungskanal (D-Kanal) zugeordneten Signalisierungs- und weiteren Informationen sichert und durch eine Teilnehmereinrichtungssteuerung (TST), die die Teilnehmereinrichtungs-Signalisierung und weitere teilnehmereinrichtungsinterne Verfahren steuert, wobei die Kommunikationsprotokoll-Steuereinrichtung (ICC) von einem über eine Mikroprozessor-Busschnittstelle (MP-BUS) angeschlossenen Mikroprozessor (MP) gesteuert wird und eine mittels integrierter Schaltung realisierte ISDN-Basisanschluß-Schnittstelleneinrichtung (SBC) verfügbar ist, die eine ISDN-orientierte, modulare Schnittstelle auf eine logische ISDN-Basisanschlußschnittstelle anpaßt, an die weitere Anpassungsmittel (AM) im Sinne einer Anpassung der logischen ISDN-Basisanschlußschnittstelle an eine folgende ISDN-Basisanschlußschnittstelle (S₀) angeschlossen werden, und die ISDN-Basisanschluß-Schnittstelleneinrichtung (SBC) einen zusätzlichen Anschluß aufweist, mittels dessen der Zugriff mehrerer ISDN-Basisanschluß-Schnittstelleneinrichtungen (SBC) auf eine ISDN-orientierte Schnittstelle (IOM) in der Art gesteuert wird, daß bei Vorliegen einer von einer ISDN-Basisanschluß-Schnittstelleneinrichtung (SBC) gebildeten Sperrinformation in allen anderen ISDN-Basisanschluß-Schnittstelleneinrichtungen (SBC) das Weiterleiten der Signalisierungsinformationen an die ISDN-orientierte Schnittstelle (IOM) verhindert wird,
**dadurch gekennzeichnet,**
daß die zwischen Kommunikationsprotokoll-Steuereinrichtung (ICC) und Übertragungseinrichtung (IBC, IEC) vorliegende ISDN-orientierte Schnittstelle (IOM) parallel mit der ISDN-orientierten Schnittstelle (IOM) der ISDN-Basisanschluß-Schnittstelleneinrichtung (SBC) verbunden ist, daß der Mikroprozessor (MP) einen zusätzlichen Anschluß (ZA) aufweist, der auf den zusätzlichen Anschluß der ISDN-Basisanschluß-Schnittstelleneinrichtung (SBC) geführt ist, und daß im Mikroprozessor (MP) der Zugriff der Kommunikationsprotokoll-Steuereinrichtung (ICC) auf die ISDN-orientierte Schnittstelle (IOM) in gleicher Weise wie der Zugriff einer weiteren ISDN-Basisanschluß-Schnittstelleneinrichtung (SBC) gesteuert wird.

2. Anordnung nach Anspruch 1,
**dadurch gekennzeichnet,**
daß der Mikroprozessor (MP) mittels eines Einchip-Mikroprozessors (MP) realisierbar ist.

3. Anordnung nach Anspruch 1,
**dadurch gekennzeichnet,**
daß die ISDN-Basisanschluß-Schnittstelleneinrichtung (SBC) und die Anpassungsmittel (AM) eine nachträglich in die Teilnehmereinrichtung (TLN) einfügbare S₀-Adaptereinrichtung (AP) bilden und über Steck-, Löt- oder Klemmverbindungen (SE) mit der ISDN-orientierten Schnittstelle (IOM), mit dem zusätzlichen Anschluß (ZA) des Mikroprozessors (MP) und mit der ISDN-Basisanschlußschnittstelle (S₀) verbindbar sind.

## Claims

1. Arrangement for forming an additional ISDN base terminal interface (S₀) which is provided for connection of a further ISDN subscriber apparatus in an ISDN subscriber apparatus (TLN), the said arrangement being connected via appropriate transmission paths (ASL) to a service-integrating, digital communications exchange (PABX) and the ISDN subscriber apparatus (TLN) being formed by the series connection of a transmission device (IBC, IEC) which takes the form of an integrated circuit and controls a transmission procedure governing the transmission of data, of a communications protocol control device (ICC) which takes the form of an integrated circuit and ensures transmission of signalling and other data assigned to a signalling channel (D channel) and of a subscriber apparatus control unit (TST) which controls subscriber apparatus signalling and other internal procedures of the subscriber apparatus, the communications protocol control device (ICC) being controlled by means of a microprocessor (MP) which is connected via a microprocessor bus interface (MP-BUS) and an ISDN-base terminal interface device (SBC) being available which takes the form of an integrated circuit and matches an ISDN-orientated, modular interface to a logical ISDN-base terminal interface, to which further matching means (AM) are connected for the purpose of matching the logical ISDN-base terminal interface to a following ISDN-base terminal interface (S₀), and the ISDN-base terminal interface device (SBC) having an additional connection by means of which access of a plurality of ISDN-base terminal interface devices (SBC) to an ISDN-orientated interface (IOM) is controlled in such a way that when an item of blocking data which is formed by one ISDN-base terminal interface device (SBC) is present, the forwarding of signalling data to the ISDN-orientated interface (IOM) is prevented in all the other ISDN-base terminal interface devices (SBC), characterised in that the ISDN-orientated interface (IOM) which is present between the communications protocol control device (ICC) and the transmission device (IBC, IEC) is connected in parallel to the ISDN-orientated interface (IOM) of the ISDN-base terminal interface device (SBC), in that the microprocessor (MP) has an additional terminal (ZA) which leads to the additional terminal of the ISDN-base terminal interface device (SBC) and in that in the microprocessor (MP), access of the communications protocol control device (ICC) to the ISDN-orientated interface (IOM) is controlled in the same way as access of a further ISDN-base terminal interface device (SBC).

2. Arrangement according to Claim 1, characterised in that the microprocessor (MP) can take the form of a single-chip microprocessor (MP).

3. Arrangement according to Claim 1, characterised in that the ISDN-base terminal interface device (SBC) and the matching means (AM) form an S₀ adapter device (AP) which can subsequently be inserted into the subscriber apparatus (TLN) and can be connected via plug-in, soldered or clamping connections (SE) to the ISDN-orientated interface (IOM), the additional terminal (ZA) of the microprocessor (MP) and the ISDN-base terminal interface (S₀).

## Revendications

1. Dispositif pour former une interface supplémentaire de raccordement de base ISDN (S₀), prévue pour le raccordement d'un autre poste d'abonné ISDN, dans un poste d'abonné ISDN (TLN), qui est raccordé, par l'intermédiaire de voies correspondantes de transmission (ASL), à un central numérique de communication à intégration de services (PABX), et qui comporte le circuit série formé d'un dispositif de transmission (IBC, IEC), qui est réalisé au moyen d'un circuit intégré et qui commande un procédé de transmission utilisé pour la transmission des informations, et d'un dispositif de commande de protocole de communication (ICC), qui est réalisé au moyen d'un circuit intégré et qui protège la retransmission des informations de signalisation, associées à un canal de signalisation (canal D), et d'autres informations, et une unité de commande (TST) du dispositif d'abonné, qui commande la signalisation du dispositif d'abonné et d'autres procédés internes au dispositif d'abonné, et dans lequel le dispositif de commande de protocole de communication (ICC) est commandé par un microprocesseur (MP) raccordé par l'intermédiaire d'une interface de bus (MP-BUS), et il est prévu un dispositif d'interface de raccordement de base ISDN (SBC), qui est réalisé au moyen d'un circuit intégré et qui adapte une interface modulaire, réglée sur le système ISDN, à une interface logique de raccordement de base ISDN, à laquelle sont raccordés d'autres moyens d'adaptation (AM) dans le sens d'une adaptation de l'interface logique de raccordement de base ISDN à une interface aval de raccordement de base ISDN (S₀), et dans lequel le dispositif d'interface de raccordement de base ISDN (SBC) comporte une borne supplémentaire, au moyen de laquelle l'accès de plusieurs dispositifs d'interface de raccordement de base ISDN (SBC) à une interface (IOM) réglée sur le système ISDN est commandé de telle sorte que, dans le cas de la présence d'une information de blocage formée par un dispositif d'interface de raccordement de base ISDN (SBC), dans tous les autres dispositifs d'interface de raccordement de base ISDN (SBC), la retransmission des informations de signalisation à l'interface (IOM) réglée sur le système ISDN est empêchée, caractérisé par le fait que l'interface (IOM) réglée sur le système ISDN et présente entre le dispositif de commande de protocole de communication (ICC) et le dispositif de transmission (IBC,IEC), est raccordée, en parallèle avec l'interface (IOM) réglée sur le système ISDN, au dispositif d'interface de raccordement de base ISDN (SBC), que le microprocesseur (MP) possède une borne supplémentaire (ZA), qui est raccordée à la borne supplémentaire du dispositif d'interface de raccordement de base ISDN (SBC), et que dans le microprocesseur (MP), l'accès du dispositif de commande de protocole de communication (ICC) à l'interface (IOM) réglée sur le système ISDN, est commandé de la même manière que l'accès d'un autre dispositif d'interface de raccordement de base ISDN (SBC).

2. Dispositif suivant la revendication 1, caractérisé par le fait que le microprocesseur (MP) peut être réalisé au moyen d'un microprocesseur monopuce (MP).

3. Dispositif suivant la revendication 1, caractérisé par le fait que le dispositif d'interface de raccordement de base ISDN (SBC) et les moyens d'adaptation (MP) forment un dispositif (AP) d'adaptation de S₀, qui peut être inséré ultérieurement dans le poste d'abonné (TLN), et peuvent être raccordés, par l'intermédiaire de liaisons à enfichage, de liaisons soudées ou de liaisons par serrage (SE), à l'interface (IOM), qui est réglée sur le système ISDN, à la borne supplémentaire (ZA) du microprocesseur (MP) et à l'interface de raccordement de base ISDN (S₀).
